# EUROPEAN PATENT SPECIFICATION

(11) **EP 2 047 964 B1**
(45) Date of publication and mention of the grant of the patent: **13.06.2012**
(21) Application number: 08161962.9
(22) Date of filing: 07.08.2008
(51) Int. Cl.: B29C 49/06, B29C 49/42, B29C 49/56

(54) **Injection-blow moulding machine and method**
Injektionsblasformungsmaschine und entsprechendes Verfahren
Machine et procédé de moulage par soufflage à injection

(30) Priority: 11.10.2007 IT MI20071967
(43) Date of publication of application: 15.04.2009
(73) Proprietor: Uniloy Milacron S.R.L., 20013 Magenta (MI) (IT)
(72) Inventor: Bertolotti, Luca, 27030 Castelnovetto (Pavia) (IT)
(74) Representative: Petruzziello, Aldo

(56) References cited:
- WO-A-03/018293
- DE-A1- 1 704 162
- US-A- 3 761 219
- US-A- 3 846 056
- US-A- 5 321 341
- US-A- 5 518 392

## Description

The present invention refers to the field of machines for injection-blow moulding of thermoplastic materials.

In order to obtain bottles starting from moulding of thermoplastic preforms (parisons), injection-blow moulding machines comprising three or four work stations are known to the art. An injection-blow moulding machine traditionally comprises:
- an injection station consisting of a press for injection moulding of the parisons,
- a blowing station consisting of a mould in which the parisons are blown in order to obtain bottles, and
- one or two additional stations dedicated to extraction of the bottles and thermal conditioning of the parisons or of the injection core on which the parisons are moulded.

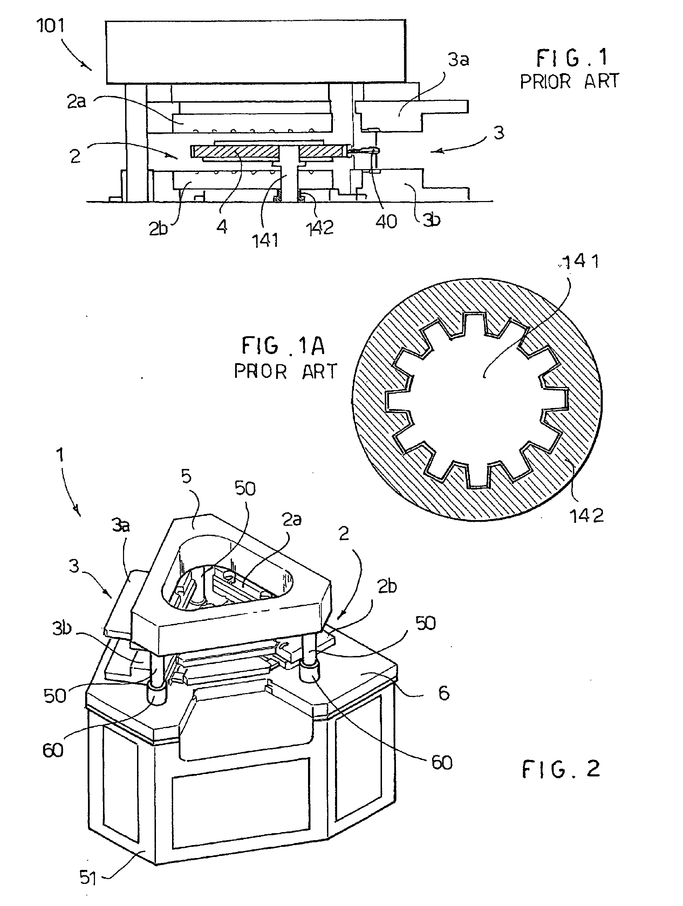

Figure 1 shows an injection-blow moulding machine according to the prior art, designated as a whole with reference numeral 101.

The machine 101 comprises an injection mould 2 consisting of a fixed mould half 2a and a movable mould half 2b, and a blowing mould 3 consisting of a fixed mould half 3a and a movable mould half 3b.

The injection moulds 2 and blowing moulds 3 pass from a closed position in which the movable mould half abuts to the fixed mould half to define a cavity in which the parisons is moulded or blown, to an open position in which the movable mould half moves away from the fixed mould half, to allow extraction or insertion of the parisons or bottle.

Transfer of the parisons from the injection station to the blowing station and then to the third station and fourth station (when present) is performed by means of raising and partial rotation of a tower 4 which carries the cores 40 adapted to support the parisons, The core carrying turret 4 is raised and rotated during the mould-half opening stage, then lowered so that the core 40 is inserted precisely between the half-cavities of the mould halves, during closure thereof.

One of the main problems regarding the reliability of injection-blowing machines is related to the potential collisions between the moveable mould halves 2b and 3b and cores 40, during high-speed operation of these devices. In fact, even if the movements of these devices are controlled by a supervision system and by position transducers, the cores 40 can come into contact with the movable mould halves 2b, 3b in the event of malfunction of their electric or hydraulic drives, or because of errors of the control supervision system or inaccuracies of the position transducers.

The high inertia, small spaces, and the high speed given to the movements of the moulds and of the core carrying turret in order to increase the productivity of the machines often make the stopping devices ineffective, in that they intervene late (albeit within fractions of a second) and consequently they allow partial or total contact between the parts that make up the moulding tools, with more or less serious damage.

US-A-3 846 056 discloses a turret lowering mechanism for injection blow moulding machines, comprising lever arms linked to the movable mould halves of a plurality of mould sets disposed radially of the axis of the turret, the lever arms being pivoted at a fixed point such that a cam located on each such lever arm moves in conjunction with the mould opening and closing movement and during the mould closing movement engages a member associated with the turret so as to move the turret in conjunction therewith.

US-A-3 761 219 discloses a dual mould clamping apparatus comprising mounting means with extended portions for the movable halves of each of the mould sets, the extended portions being attached to a common member which moves the movable mould halves in unison in the mould open and mould closed directions.

DE 17 04 162 A1 discloses an injection blow moulding machine comprising injection and blow mould halves supported by fixed and mobile plates and a turret carried by the mobile plate and movable with respect to the mobile plate.

US-A-5518 392 discloses an injection blow moulding apparatus including stacked moulds comprising movable supports for the mating mould portions of the upper and lower injection and blow moulds, which are coupled to the mould clamping mechanism of the apparatus through mechanical linkage which causes the upper and lower moulds to be opened and closed simultaneously.

US-A-5 321 341 discloses a drive module of a machine having a turret adjacent the upper end and a motor adjacent the lower end. The turret is driven by the motor to move between different stations of the machine by the controlled rotation of the turret about the axis of rotation.

Since the movement of the turret 4 is a combination of rotation and vertical translation, it is carried out by means of a splined shaft 141 (Fig. 1A) vertically sliding inside a splined hub 142 set in rotation by an electric or hydraulic device. The coupling between the splined shaft 141 and the splined hub 142 must be provided with a coupling play, in order to allow axial sliding of the shaft inside the hub; this results in a potential error in radial positioning of the cores 40 of the turret 4, which leads to rapid wear on said cores 40 which form the neck of the bottle.

Object of the present invention is to overcome the drawbacks of the prior art by providing a machine and a method for injection-blow moulding that are able to avoid the risk of collision between moulding tools during movement thereof.

Another object of the present invention is to provide such an injection-blow moulding machine and method that are precise, reliable, efficient and able to ensure high production speeds.

These objects are achieved according to the invention with the machine and the method whose features are listed in appended independent claims 1 and 6.

The injection blowing machine, according to the invention, comprises:
- an injection mould consisting of a fixed mould half and a movable mould half, in which a parisons is moulded,
- a blowing mould consisting of a fixed mould half and a movable mould half, in which the parisons is blown to obtain a bottle, and
- a core-carrying turret supporting at least one core to transfer the parisons from the injection mould to the blowing mould and to transfer the bottle from the blowing mould to the discharge.

The movable mould halves and the core carrying turret are driven in translation by the same drive mechanism. The use of a single drive mechanism to operate both the movable injection and blowing mould halves and the core carrying turret prevents any possible interference of the cores with the movable mould halves. The machine thus proves extremely safe and can work at a high production speed, with minimal wear on the cores.

Further characteristics of the invention will be made clearer by the detailed description that follows, referring to a purely exemplifying and therefore non limiting embodiment thereof, illustrated in the appended drawings, wherein:
Figure 1 is a diagrammatic side elevational view, partially broken away and in section, illustrating an injection-blowing machine, according to the prior art;
Figure 1A is a diagrammatic cross sectional view illustrating the coupling between a splined shaft and a hub forming part of the drive system of the core carrying turret of the machine of Figure 1;
Figure 2 is a diagrammatic, perspective view illustrating the outer structure of an injection-blowing machine according to the invention;
Figure 3 is a diagrammatic, partially sectional, side elevational view, illustrating the injection-blowing machine of Figure 2, in which the moulds are in the closed position, and
Figure 4 is a view like Figure 3, but illustrating the moulds in the open position.

The injection-moulding machine according to the invention, designated as a whole by reference numeral 1, is described with the aid of Figures 2-5.

With reference for now to Figure 2, the injection-blowing machine 1 comprises a portal 5 supported by vertical guide columns 50 anchored to a fixed machine bed 51. The portal 5 integrally supports the fixed mould halves 2a and 3a, respectively, of the injection mould 2 and of the blowing mould 3.

Figure 2 shows a fixed, triangular shaped portal 5, for an injection-blowing machine with three stations. However, a square portal for an injection-blowing machine with four stations may also be provided.

The movable mould halves 2b and 3b of the injection mould and of the blowing mould are mounted on a single movable plate 6. The movable plate 6 is mounted to be slidable in a vertical direction on the guide columns 51, by means of sleeves 60.

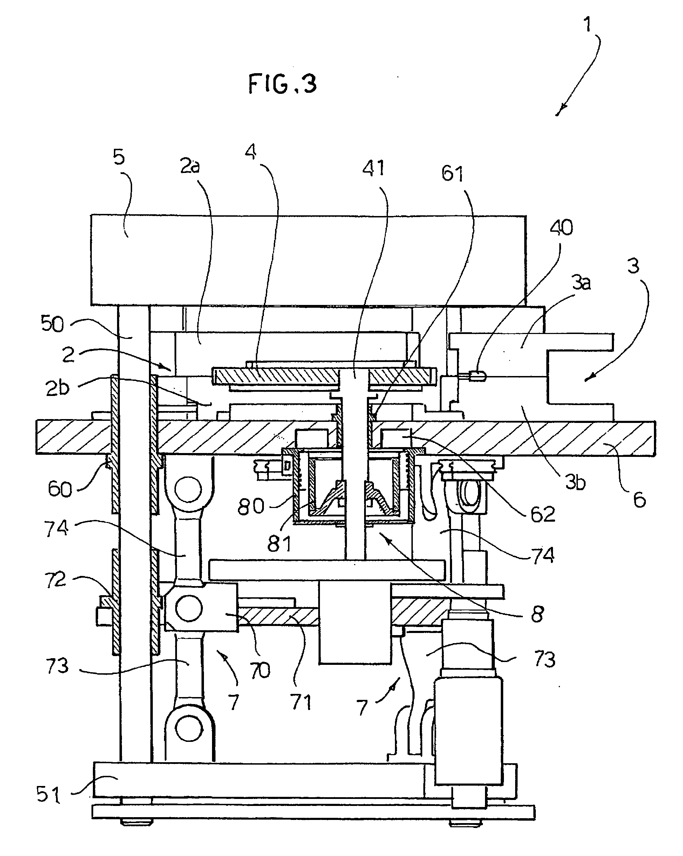

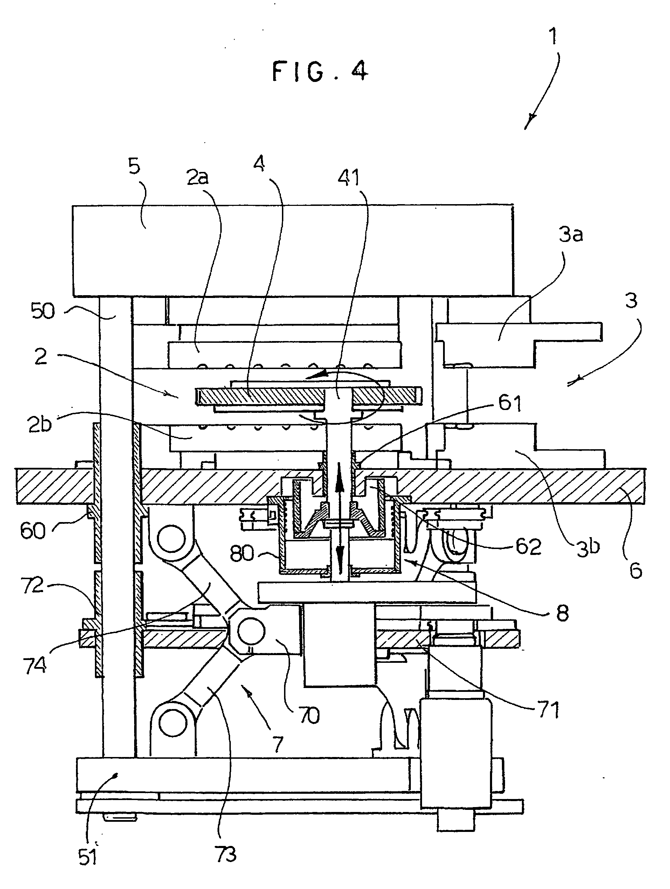

With reference to Figures 3 and 4, the movable mould carrying plate 6 is moved vertically by means of one or more per se known toggle mechanisms 7. The toggle mechanism 7 comprises a slide 70 mounted to slide horizontally on an intermediate horizontal plate 71. The intermediate plate 71 is mounted to slide vertically on the guide columns 50, by means of sleeves 72.

Two arms 73 and 74 are hinged to the slide 70. The first arm 73 is hinged to the fixed machine bed 51, whereas the second arm 74 is hinged to the movable plate 6 which supports the movable mould halves 2b and 3b. In this manner, translation of the movable plate 6 and thus closing and opening of the moulds 1 and 2 is caused by operating the slides 70 of the toggle mechanisms 7.

The turret 4 that carries the cores 40 that support the parisons or the bottles is supported by a vertical shaft 41. The upper end of the shaft 41 is fixed eccentrically in the turret 4, whereas the lower end of the shaft 41 is supported by the intermediate plate 71 of the toggle mechanism. The shaft 41 is mounted to slide vertically inside a sleeve 61 integral with the movable plate 6, so as to be able to cross the movable plate 6.

As is known, the turret 4 must perform a rotary movement and a translational movement in a vertical direction. For this purpose, the shaft 41 of the core carrying turret is controlled in vertical translation by the movement of the intermediate plate 71 of the toggle mechanism. Furthermore, the shaft 41 of the core carrying turret is controlled in rotation directly by a torque motor 8.

The torque motor 8 comprises a stator 80 integral with the movable plate 6 which supports the movable mould halves and a rotor 81 integral with the shaft 41 of the core carrying turret. The rotor 81 of the torque motor is vertically slidable inside the casing of the stator 80. Furthermore, an annular groove 62 is formed in the underside of the movable plate 6, around the shaft 41, to receive the upper edge of the rotor 81, when the turret must be raised (Figure 4).

The turret 4 is raised exactly halfway through the working stroke of the mould halves, synchronising the movement by means of the intermediate plate 71 connected to the toggle device that fulfils the function of driving the press.

The use of a single drive 7 for controlling the movement of both movable mould halves 2b and 3b and of the turret 4 and which in the final stage develops the closing force of the moulds 2 and 3, necessary to block them, represents a further simplification of the control process of this stage, which is typically rather elaborate. In fact, in machines of the prior art, two independent axes (mould halves and turret) must be synchronised in a simultaneous deceleration movement. Furthermore, in the machine 1 according to the invention, potential delays in the machine cycle due to differences in the movement time between the two axes (mould halves and turret) are ruled out, to the advantage of the machine's productivity.

The torque motor 8, in special execution, allows the rotor 81 to translate axially during the rotation stage, eliminating the need to interpose a splined shaft and the coupling plays connected with its use. Furthermore, the acceleration and deceleration movement of the rotor 81 takes place with very high dynamics and is completely controlled and supported by the magnetic field of the motor 8, without interposition of gears and/or drive transmission members subject to operating wear.

Operation of the injection-blowing machine according to the invention will now be described.

At the start of the cycle, the injection mould 2 is open, therefore the core 40 of the turret 4 is disposed level with the cavity of the injection mould 2, that is, between the movable mould half 2b and the fixed mould half 2a. The toggle mechanism 7 is operated, so as to raise the movable mould half 2b towards the fixed mould half 2a and at the same time to cause upward translation of the injection core, which is compressed between the cavities of the two mould halves 2a and 2b, which close. The plastic material is then injected into the injection mould 2 so as to form the parisons.

Once the parisons has been formed, the injection mould 2 is opened, by operating the toggle mechanism 7 so as to lower the movable mould half 2b and at the same time also the core 40 which supports the parisons. The torque motor 8 is then operated, so as to cause the turret 4 to rotate and bring the core 40 with the parisons level with the cavity of the blowing mould 3 which is open, that is, between the movable mould half 3b and the fixed mould half 3a.

At this time the toggle mechanism 7 is operated to close the blowing mould 3. The movable mould half 3b is then raised towards the fixed mould half 3a and at the same time the core 40 that supports the parisons is also raised, disposing the parisons between the two closed mould halves 3a and 3b. The parisons is blown inside the blowing mould 3 so as to take on the shape of the cavity of the mould and obtain the desired bottle.

When the blowing stage has been completed, the blowing mould 3 is opened by lowering by means of the toggle mechanism 7 the movable mould half 3b and at the same time the core 40 anchored to the bottle neck. The torque motor 8 is then operated to cause the turret 4 to rotate and bring the bottle supported by the core 40 to the discharge station.

Once the bottle has been discharged, the torque motor 8 is operated to cause the turret 4 to rotate and bring the core 40 level with the cavity of the injection mould 2 again to begin a new cycle.

Numerous changes and modifications of detail within the reach of a person skilled in the art can be made to the present exemplifying embodiments of the invention without thereby departing from the scope of the invention as set forth in the appended claims.

## Claims

1. An injection-blow moulding machine (1) comprising:
- an injection mould (2) consisting of a fixed mould half (2a) and a movable mould half 2b), in which a parison is moulded,
- a blowing mould (3) consisting of a fixed mould half (3a) and a movable mould half (3b), in which the parison is blown to obtain a bottle, and
- a core carrying turret (4) supporting at least one core (40) to transfer the parison from the injection mould (2) to the blowing mould (3) and to transfer the bottle from the blowing mould to the discharge stationsaid movable mould halves (2b, 3b) and said core carrying turret (4) being driven in translation by the same drive mechanism (7),
- wherein said movable mould halves (2b, 3b) are mounted on the same movable plate (6) driven in translation by said drive mechanism (7),
**characterized in that**
- said drive mechanism is a toggle drive mechanism (7) comprising a slide (70) mounted slidably in a translating intermediate plate (71) and hinged to a first arm (73) hinged to a fixed machine bed (51) and to a second arm (74) hinged to said movable plate (6) that supports the movable mould halves (2b, 3b),
- such that the toggle drive mechanism (7) is suitable for controlling the movement of both movable mould halves (2b, 3b) and turret (4), meanwhile developing, in the final stage, a closing force of the injection mould (2) and the blowing mould (3).

2. A machine (1) according to claim 1, **characterised in that** said core carrying turret (4) is connected to said intermediate translating plate (71) of the toggle mechanism by means of a shaft (41) which crosses said movable plate (6) that supports the movable mould halves (2b, 3b).

3. A machine (1) according to claim 1 or 2, **characterised in that** said core carrying turret (4) is driven in rotation by a torque motor (8).

4. A machine (1) according to claim 3, **characterised in that** said torque motor (8) comprises a stator (80) integral with said movable plate (6) that supports the movable mould halves (2b, 3b) and a rotor (81) integral with the shaft (41) that supports said core carrying turret.

5. A machine (1) according to claim 4, **characterised in that** said rotor (81) of the torque motor is mounted axially slidably inside said stator (80) without the interposition of gears.

6. An injection and blow moulding method for the machine according to claim 1 comprising the following steps:
- insertion of the core (40) into the injection mould (2) and closure of the injection mould (2),
- injection of plastic material into the mould (2) for formation of a parison,
- opening of the injection mould (2) and extraction of the core supporting the parison,
- moving of the core (40) to transfer the parison into a blowing mould (3),
- blowing of the parisons inside the mould (3) to form a bottle,
- opening of the blowing mould (2) and removal of the core supporting the bottle,
- moving of the core (40) to transfer the bottle to the discharge station, wherein the closing and opening movements of the moulds (2, 3) and the translating movement of the core (40) for insertion/removal thereof into/from the moulds (2, 3) are controlled by the same drive mechanism (7),
**characterized in that**
- said drive mechanism is a toggle drive mechanism (7) comprising a slide (70) mounted slidably in a translating intermediate plate (71) and hinged to a first arm (73) hinged to a fixed machine bed (51) and to a second arm (74) hinged to said movable plate (6) that supports the movable mould halves (2b, 3b),
- such that the toggle drive mechanism (7) is suitable for controlling the movement of both movable mould halves (2b, 3b) and turret (4), meanwhile developing, in the final stage, a closing force of the injection mould (2) and the blowing mould (3).

7. A method according to claim 6, **characterised in that** in order to move from the injection mould (2) to the blowing mould (3), from the blowing mould to the discharge station, and from the discharge station to the injection mould, said core (9) performs a rotation, by means of a torque motor (80).

## Patentansprüche

1. Injektionsblasformungsmaschine (1), umfassend:
- eine Injektionsform (2), die aus einer starren Formhälfte (2a) und einer beweglichen Formhälfte (2b) besteht, in der ein Vorformling geformt wird,
- eine Blasform (3), die aus einer starren Formhälfte (3a) und einer beweglichen Formhälfte (3b) besteht, in der der Vorformling zum Erzielen einer Flasche geblasen wird, und
- einen kerntragenden Revolverkopf (4), der zumindest einen Kern (40) stützt, zum Überführen des Vorformlings von der Injektionsform (2) zu der Blasform (3) und zum Überführen der Flasche von der Blasform zur Entladestation, wobei die beweglichen Formhälften (2b, 3b) und der kerntragende Revolverkopf (4) in Translation durch denselben Antriebsmechanismus (7) angetrieben sind,
- wobei die beweglichen Formhälften (2b, 3b) auf derselben beweglichen Platte (6) angebracht sind, die in Translation durch den Antriebsmechanismus (7) angetrieben ist,
**dadurch gekennzeichnet, dass**
- der Antriebsmechanismus ein Kniehebelantriebsmechanismus (7) ist, umfassend ein Gleitstück (70), das gleitbar in einer Translationszwischenplatte (71) angebracht ist und an einen ersten Arm (73) angelenkt ist, der an ein starres Maschinenbett (51) angelenkt ist, und an einen zweiten Arm (74) angelenkt ist, der an die bewegliche Platte (6) angelenkt ist, die die beweglichen Formhälften (2b, 3b) stützt,
- sodass der Kniehebelantriebsmechanismus (7) zum Steuern der Bewegung der beweglichen Formhälften (2b, 3b) wie auch des Revolverkopfs (4) geeignet ist, während er in der Schlussphase eine Schließkraft der Injektionsform (2) und der Blasform (3) entwickelt.

2. Maschine (1) nach Anspruch 1, **dadurch gekennzeichnet, dass** der kerntragende Revolverkopf (4) mithilfe einer Welle (41), die die bewegliche Platte (6) quert, welche die beweglichen Formhälften (2b, 3b) stützt, mit der Translationszwischenplatte (71) des Kniehebelantriebsmechanismus verbunden ist.

3. Maschine (1) nach einem der Ansprüche 1 oder 2, **dadurch gekennzeichnet, dass** der kerntragende Revolverkopf (4) durch einen Drehmomentmotor (8) drehgetrieben ist.

4. Maschine (1) nach Anspruch 3, **dadurch gekennzeichnet, dass** der Drehmomentmotor (8) einen Stator (80) einstückig mit der beweglichen Platte (6), die die beweglichen Formhälften (2b, 3b) stützt, und einen Rotor (81) einstückig mit der Welle (41) umfasst, die den kerntragenden Revolverkopf stützt.

5. Maschine (1) nach Anspruch 4, **dadurch gekennzeichnet, dass** der Rotor (81) des Drehmomentmotors axial gleitbar innerhalb des Stators (80) ohne Zwischenschaltung von Getrieben angebracht ist.

6. Injektions- und Blasformungsverfahren für die Maschine (1) nach Anspruch 1, folgende Schritte umfassend:
- Einlegen des Kerns (40) in die Injektionsform (2) und Schließen der Injektionsform (2),
- Einlegen von Kunststoffmaterial in die Form (2) zum Ausbilden eines Vorformlings,
- Öffnen der Injektionsform (2) und Herausnehmen des Kerns, der den Vorformling stützt,
- Bewegen des Kerns (40) zum Überführen des Vorformlings in eine Blasform (3),
- Blasen des Vorformlings innerhalb der Form (3) zum Ausbilden einer Flasche,
- Öffnen der Blasform (2) und Entnehmen des Kerns, der die Flasche stützt,
- Bewegen des Kerns (40) zum Überführen der Flasche zur Entladestation, wobei die Schließ- und Öffnungsbewegungen der Formen (2, 3) und die Translationsbewegung des Kerns (40) zum Einlegen/Entnehmen desselben in die/aus den Formen (2, 3) durch denselben Antriebsmechanismus (7) gesteuert werden,
**dadurch gekennzeichnet, dass**
- der Antriebsmechanismus ein Kniehebelantriebsmechanismus (7) ist, umfassend ein Gleitstück (70), das gleitbar in einer Translationszwischenplatte (71) angebracht ist und an einen ersten Arm (73) angelenkt ist, der an ein starres Maschinenbett (51) angelenkt ist, und an einen zweiten Arm (74) angelenkt ist, der an die bewegliche Platte (6) angelenkt ist, die die beweglichen Formhälften (2b, 3b) stützt,
- sodass der Kniehebelantriebsmechanismus (7) zum Steuern der Bewegung der beweglichen Formhälften (2b, 3b) wie auch des Revolverkopfs (4) geeignet ist, während er in der Schlussphase eine Schließkraft der Injektionsform (2) und der Blasform (3) entwickelt.

7. Verfahren nach Anspruch 6, **dadurch gekennzeichnet, dass** der Kern (9) zum Bewegen von der Injektionsform (2) zur Blasform (3), von der Blasform (3) zur Entladestation und von der Entladestation zur Injektionsform mithilfe eines Drehmomentmotors (80) eine Drehung ausführt.

## Revendications

1. Machine de moulage par soufflage à injection (1) comprenant :
- un moule d'injection (2) consistant en une moitié de moule fixe (2a) et une moitié de moule mobile (2b), dans lequel une paraison est moulée,
- un moule de soufflage (3) consistant en une moitié de moule fixe (3a) et une moitié de moule mobile (3b) dans lequel la paraison est soufflée pour obtenir une bouteille, et
- une tourelle portant le noyau (4) supportant au moins un noyau (40) pour transférer la paraison du moule d'injection (2) vers le moule de soufflage (3) et pour transférer la bouteille du moule de soufflage vers le poste de décharge, lesdites moitiés de moule mobiles (2b, 3b) et ladite tourelle portant le noyau (4) étant entraînées en translation par le même mécanisme d'entraînement (7),
- dans lequel lesdites moitiés de moule mobiles (2b, 3b) sont montées sur le même plateau mobile (6) entraîné en translation par ledit mécanisme d'entraînement (7), **caractérisée en ce que**
ledit mécanisme d'entraînement est un mécanisme d'entraînement à volet (7) comprenant une coulisse (70) montée de manière coulissante dans un plateau intermédiaire en translation (71) et articulée sur un premier bras (73) articulé sur un banc de machine fixe (51) et sur un second bras (74) articulé sur ledit plateau mobile (6) qui soutient les moitiés de moule mobiles (2b, 3b),
- de telle manière que le mécanisme d'entraînement à volet (7) est approprié pour commander le mouvement des deux moitiés de moule mobiles (2b, 3b) et de la tourelle (4) tout en développant entre-temps, à l'étape finale, une force de fermeture du moule d'injection (2) et du moule de soufflage (3).

2. Machine (1) selon la revendication 1, **caractérisée en ce que** ladite tourelle portant le noyau (4) est reliée audit plateau intermédiaire en translation (71) du mécanisme à volet via un arbre (41) qui traverse ledit plateau mobile (6) qui supporte les moitiés de moule mobiles (2b, 3b).

3. Machine (1) selon la revendication 1 ou 2, **caractérisée en ce que** ladite tourelle portant le noyau (4) est entraînée en rotation par un moteur couple (8).

4. Machine (1) selon la revendication 3, **caractérisée en ce que** ledit moteur couple (8) comprend un stator (80) monobloc avec ledit plateau mobile (6) qui soutient les moitiés de moule mobiles (2b, 3b) et un rotor (81) monobloc avec l'arbre (41) qui supporte ladite tourelle portant le noyau.

5. Machine (1) selon la revendication 4, **caractérisée en ce que** ledit rotor (81) du moteur couple est monté de manière à coulisser axialement à l'intérieur dudit stator (80) sans l'intervention d'engrenages.

6. Procédé de moulage par soufflage à injection destiné à la machine selon la revendication 1 comprenant les étapes suivantes :
- insertion du noyau (40) dans le moule d'injection (2) et fermeture du moule d'injection (2),
- injection de matériau plastique dans le moule (2) pour former une paraison,
- ouverture du moule d'injection (2) et extraction du noyau supportant la paraison,
- déplacement du noyau (40) pour transférer la paraison dans un moule de soufflage (3),
- soufflage des paraisons à l'intérieur du moule (3) pour former une bouteille,
- ouverture du moule d'injection (2) et retrait du noyau supportant la bouteille,
- déplacement du noyau (40) pour transférer la bouteille vers le poste de décharge, sachant que les mouvements de fermeture et d'ouverture des moules (2,3) et le mouvement de translation du noyau (40) pour l'insertion/le retrait de celui-ci dans les/des moules (2, 3) sont commandés par le même mécanisme d'entraînement (7), **caractérisé en ce que**
- ledit mécanisme d'entraînement est un mécanisme d'entraînement à volet (7) comprenant une coulisse (70) montée de manière coulissante dans un plateau intermédiaire en translation (71) et articulée sur un premier bras (73) articulé sur un banc de machine fixe (51) et sur un second bras (74) articulé sur ledit plateau mobile (6) qui soutient les moitiés de moule mobiles (2b, 3b),
- de telle manière que le mécanisme d'entraînement à volet (7) est approprié pour commander le mouvement des deux moitiés de moule mobiles (2b, 3b) et de la tourelle (4) tout en développant entre-temps, à l'étape finale, une force de fermeture du moule d'injection (2) et du moule de soufflage (3).

7. Procédé selon la revendication 6, **caractérisé en ce que** pour se déplacer du moule d'injection (2) vers le moule de soufflage (3), du moule de soufflage vers le poste de décharge, et du poste de décharge vers le moule d'injection, ledit noyau (9) effectue une rotation au moyen d'un moteur couple (80).
